# EUROPEAN PATENT SPECIFICATION

(11) **EP 3 570 177 B1**
(45) Date of publication and mention of the grant of the patent: **30.12.2020**
(21) Application number: 18800022.8
(22) Date of filing: 07.11.2018
(51) Int. Cl.: G06F 13/40

(54) **USB INTERFACE CIRCUIT AND MOBILE DEVICE**
USB-SCHNITTSTELLENSCHALTUNGEN UND MOBILE VORRICHTUNGEN
CIRCUIT D'INTERFACE USB ET DISPOSITIF MOBILE

(30) Priority: 20.03.2018 CN 201810233692
(43) Date of publication of application: 20.11.2019
(73) Proprietor: Hisense Mobile Communications Technology Co., Ltd., Qingdao, Shandong 266071 (CN)
(72) Inventor: SUN, Yongliang, Shandong 266071 (CN); WANG, Chao, Shandong 266071 (CN); ZHOU, Yanan, Shandong 266071 (CN)
(74) Representative: Pfenning, Meinig & Partner mbB
(86) International application number: PCT/CN2018/114397
(87) International publication number: WO 2019/179129

(56) References cited:
- EP-A1- 3 109 767
- CN-A- 104 951 034
- CN-A- 106 647 539
- CN-A- 107 300 965
- CN-A- 108 399 142
- CN-U- 205 721 762

## Description

### Field

This disclosure relates to Universal Serial Bus (USB) interface circuits and mobile devices.

### Background

A waterproof mobile phone is quite popular among outdoor fans due to its waterproof performance. An exposed interface of the previous waterproof mobile phone (e.g., a USB interface) is sealed with a rubber plug to shield the interface from water. In this arrangement, a user needs to remove the rubber plug before using the interface. In some cases, this can cause an inconvenience to the user. Accordingly, some waterproof mobile phones are designed without a rubber plug to shield an interface from water. In such examples, the interface is exposed.

In some examples, the mobile phone may include On-The-Go (OTG) functionality, which allows a mouse, a keyboard, a USB flash disk, or another OTG device to plug into and accessed by the mobile phone. In such examples, the mobile phone detects an OTG device using an ID contact in the USB interface. As specified in the USB protocol, an ID contact on the OTG device side is grounded. This allows the mobile phone to detect the connected OTG device due to a level change from a high level to a low level if the ID contact on the mobile phone side is a high level (e.g., typically 1.8V or higher).

### Summary

This disclosure provides a USB interface circuit and a mobile device so as to avoid the exposed USB interface from being damaged, while enabling an OTG device to connect with it normally.

According to a first aspect, embodiments of this disclosure provide a mobile device, which includes a USB interface circuit including a power supply circuit having an output, a USB interface having an ID contact, a trigger detection circuit having an input, and an isolation circuit located between the power supply circuit and the ID contact. The isolation circuit includes a first end and a second end. The first end of the isolation circuit and the output of the power supply circuit are connected with the input of the trigger detection circuit. The second end of the isolation circuit is connected with the ID contact. The isolation circuit is configured to control a voltage at the ID contact below a preset voltage upon detecting an OTG device is not connected with the USB interface, wherein the preset voltage is an electrolytic voltage threshold of water.

### Brief Description of the Drawings

Fig. 1 is a schematic principle diagram of a USB interface circuit in the related art.
Fig. 2 is a schematic principle diagram of a USB interface circuit according to one example embodiment of this disclosure.
Fig. 3 shows a schematic principle diagram of a USB interface circuit according to another example embodiment of this disclosure.

### Detailed Description of the Embodiments

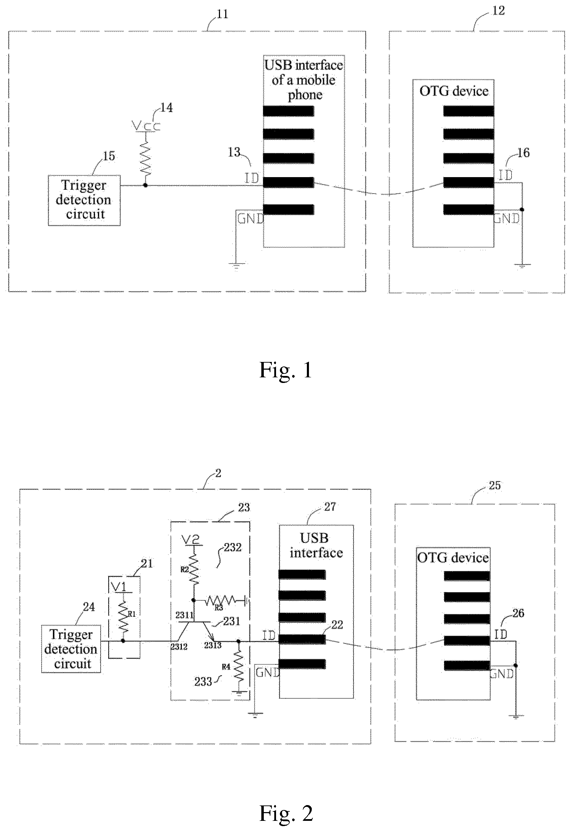

Fig. 1 is a schematic principle diagram of a USB interface circuit 11 of a mobile phone in the related art connectable to an OTG device 12. When the OTG device 12 is not connected with a USB interface, an ID contact 13 of the USB interface is connected with a pull-up circuit 14 in a central processing unit (CPU) of the mobile phone so that the ID contact 13 is at a high level. Additionally, a trigger detection circuit 15 is connected with the ID contact 13, and detects a default high-level signal. When the OTG device 12 is connected with the USB interface, an ID contact 16 of the OTG device 12 is grounded so that the ID contact 13 of the USB interface is pulled from the high level down to a low level. In such cases, the trigger detection circuit 15 detects the change in the level of the ID contact 13 from the high level to the low level, and identifies that an OTG device (e.g., the OTG device 12) is connected with the USB interface. As a result, the mobile phone can power the OTG device.

However, when the OTG device 12 is not in connection with the USB interface, a voltage at the ID contact 13 on the mobile device side remains at a high level. In some examples, if the USB interface contacts water, the water may be electrolyzed due to a voltage difference between the ID contact 13 and a GND contact (a ground contact) of the USB interface. In such examples, the ID contact may be damaged (e.g., become rusted, etc.) due to the water. This damage to the ID contact may cause poor contact with other devices such as the OTG device 12. As a result, the mobile phone may not be able to identify connected devices (e.g., the OTG device 12).

As per the laws of thermodynamics, the electrolytic voltage threshold of water is 1.23V at a standard atmospheric pressure and a normal temperature of 25 degrees Celsius. For example, if the voltage level at an ID contact of a USB interface in a mobile device is maintained below 1.23V, the water will not be electrolyzed, and therefore the contact will not become rusted and possibly damaged. Accordingly, when an OTG device is not connected with the USB interface, the voltage level at the ID contact on the mobile device side is maintained below the electrolytic voltage threshold of water, but the voltage at the ID contact is able to change from a high level to a low level so that an OTG device can be identified when the OTG device is connected with the USB interface.

Based on the idea above, embodiments of this disclosure provide a USB interface circuit including a power supply circuit having an output, a USB interface having an ID contact, a trigger detection circuit having an input, and an isolation circuit located between the power supply circuit and the ID contact. The isolation circuit includes a first end and a second end. The first end of the isolation circuit and the output of the power supply circuit are connected with the input of the trigger detection circuit. The second end of the isolation circuit is connected with the ID contact. The isolation circuit is configured to control a voltage at the ID contact below a preset voltage upon detecting an OTG device is not connected with the USB interface.

In some embodiments, the USB interface with the ID contact may be a USB interface circuit with an ID contact.

Additionally, and in some embodiments, the isolation circuit may include a first biasing circuit having an output, a second biasing circuit having an output, and a transistor. The transistor includes a control end connected (e.g., electrically connected) with the output of the first biasing circuit, a first end acting as the first end of the isolation circuit, and a second end acting as the second end of the isolation circuit. The output of the second biasing circuit and the second end of the transistor are connected (e.g., electrically connected) with the ID contact.

Further, and in some embodiments, when the OTG device is not connected with the USB interface, the transistor may operate in an amplification state or a turned-off state based on a voltage at the output of the first biasing circuit and a voltage at the output of the second biasing circuit to control the voltage at the ID contact below the preset voltage. When the OTG device is connected with the USB interface, the transistor may operate in a saturated state to trigger the trigger detection circuit to identify the OTG device.

Fig. 2 illustrates a schematic principle diagram of a USB interface circuit 2 according to one example embodiment of this disclosure.

As shown, the USB interface circuit 2 includes a power supply circuit 21, a USB interface 27 with an ID contact 22, an isolation circuit 23 located between the power supply circuit 21 and the ID contact 22, and a trigger detection circuit 24. In the example of Fig. 2, the isolation circuit 23 includes a first biasing circuit 232, a second biasing circuit 233, and a transistor 231. As shown, the transistor 231 includes a control end 2311 electrically connected with an output of the first biasing circuit 232, and first and second ends 2312, 2313. The first end 2312 of the transistor 231 and an output of the power supply circuit 21 are electrically connected with an input of the touch detection circuit 24. The second end 2313 of the transistor 231 and an output of the second biasing circuit 233 are electrically connected with the ID contact 22.

When an OTG device 25 is not connected with the USB interface 27, the transistor 231 operates in an amplification state based on a voltage at the output of the first biasing circuit 232, and a voltage at the output of the second biasing circuit 233. As a result, the power supply circuit 21 is isolated from the ID contact 22 to prevent the voltage output by the power supply circuit 21 from being fully applied to the ID contact 22, thereby controlling the voltage at the ID contact 22 below a preset voltage. However, when the OTG device 25 is connected with the USB interface 27 (as shown in Fig. 2), the transistor 231 operates in a saturated state to trigger the touch detection circuit 24 to identify the OTG device 25. In some embodiments, the preset voltage is the electrolytic voltage threshold of water (e.g., 1.23V).

As shown in Fig. 2, the transistor 231 in the isolation circuit 23 may be an NPN-type Bipolar Junction Transistor (BJT) by way of an example. In other embodiments, the transistor 231 may alternatively be a PNP-type BJT, although the embodiments of this disclosure are not limited thereto.

The USB interface circuit according to the embodiments of this disclosure may be located on any known device including but not limited to a mobile phone, a computer, a tablet computer, a media player, a Personal Digital Assistant (PDA), an on-vehicle device, a wearable device, a Virtual Reality (VR) on-head display device, etc., or any combination thereof. In some embodiments, the USB interface according to this embodiment may be applicable to a waterproof device.

In some embodiments, the type of the USB interface may include USB Type-A, USB Type-B, and USB-micro.

As shown in Fig. 2, the power supply circuit 21 includes a first power supply VI, and a first resistor R1 with one end electrically connected with the first power supply VI, and another end serving as the output of the power supply circuit 21.

In some examples, the power supply circuit 21 provides a default high level (e.g., 1.8V) as an input signal to the trigger detection circuit 24. In such examples, the voltage of the first power supply V1 may be selected as 1.8V In some embodiments of this disclosure, the resistance of the first resistor R1 is 10KΩ. The voltage of the first power supply VI, and the resistance of the first resistor R1 may alternatively be other values, although the embodiments of this disclosure are not limited thereto.

The trigger detection circuit 24 includes an input end, which is configured to output a control signal for identifying the OTG device 25, according to a change of the input signal from a high level to a low level. Specific components of the trigger detection circuit 24 may be known to those skilled in the art, so a detailed description thereof is omitted in the embodiments of this disclosure.

In some embodiments, the power supply circuit 21 and the trigger detection circuit 24 may be integrated in a CPU of a device (e.g., a mobile phone), or the power supply circuit 21 and/or the trigger detection circuit 24 may arranged separate from the CPU.

In some examples, the ID contact 22 may be a conductive contact of the USB interface 27, and configured to be electrically connected with a corresponding conductive contact of the OTG device 25 when the OTG device is connected with the USB interface 27.

As shown in Fig. 2, the first biasing circuit 232 may provide the control end 2311 of the transistor 231 with a bias voltage, and includes a second power supply V2, and second and third resistors R2, R3. The second and third resistors R2, R3 are connected in series between the second power supply V2 and ground. As shown, the first biasing circuit 232 is a voltage divider biasing circuit with a voltage output serving as a common end of the second resistor and the third resistor. For example, the output of the first biasing circuit 232 is located at an intermediate node between the second resistor R2 and the third resistor R3. As such, an end of the second resistor R2 connected with the third resistor R3 acts as the output of the first biasing circuit 232, and/or an end of the third resistor R3 connected with the second resistor R2 acts as the output of the first biasing circuit 232.

The second power supply V2 may have similar or different structure with that of the first power supply VI, although the embodiments of this disclosure are not limited thereto. In some embodiments of this disclosure, the voltage of the second power supply V2 may be set at the same level as the first power supply V1 (e.g., 1.8V).

As shown in Fig. 2, the voltage output of the first biasing circuit 232 is electrically connected with the control end 2311 of the transistor 231, and configured to apply voltage on the third resistor R3 as a result of voltage division to the control end 2311 of the transistor 231. The particular voltage as a result of voltage division is determined by the resistances of the second resistor R2 and the third resistor R3. For example, in some embodiments of this disclosure, the resistance of the second resistor R2 is 100KΩ, and the resistance of the third resistor R3 is 150 KΩ, so the voltage on the third resistor R3 as a result of voltage division is 1.08V

The second biasing circuit 233 is configured to provide the second end 2313 of the transistor 231 with a bias voltage, and in some embodiments of this disclosure, the second biasing circuit 233 includes a fourth resistor R4 (as shown in Fig. 2) with one end serving as the output of the second biasing circuit 233, and the other end grounded. As such, the second biasing circuit 233 may clamp the second end 2313 of the transistor 231 at a low level by default. For example, in some embodiments, the resistance of the second resistor R2 is 100KΩ.

In some embodiments of this disclosure, the transistor 231 is an NPN-type BJT (as illustrated in Fig. 2) with an amplification factor of 230. When the transistor 231 is an NPN-type BJT, the control end 2311 of the transistor is a base of the BJT, the first end 2312 of the transistor is a collector of the BJT, and the second end 2313 of the transistor is an emitter of the BJT. As shown, the isolation circuit 23 and the power supply circuit 21 may form a co-emitter amplification circuit.

An operating principle of the USB interface circuit 2 according to this embodiment is described below when, for example, the transistor 231 is an NPN-type BJT.

When the OTG device 25 is not connected with the USB interface 27, the voltage U_{b} at the base of the BJT is the voltage 1.08V on the third resistor R3 as a result of voltage division at the instance of time when the system is powered on (e.g., U_{b}=1.08V). The emitter of the BJT is clamped at a low level by the second biasing circuit 233 (e.g., Uₑ=0V). Accordingly, the initial voltage difference between the base and the emitter of the BJT is 1.08V, which is higher than the threshold voltage of the BJT (e.g., a threshold voltage of a silicon transistor is typically 0.6V-0.7V). As a result, the BJT is turned on, and the BJT operates in an amplification state due to a limiting gain of current amplification. The amplification circuit is analyzed statically, and current at the emitter is calculated as Iₑ=0.0048mA according to the formula (1) of a static operating point as follows. ${I}_{e} = \frac{{U}_{b} - {U}_{be}}{{R}_{e}}$ (1)

Where U_{b} is the voltage at the base, Rₑ is the resistance of the emitter (e.g., the fourth resistor R4 in this embodiment), and U_{be} is 0.6V after the BJT is operating in the amplification state.

In this manner, the voltage at the emitter is Uₑ=Iₑ*Rₑ=0.48V (e.g., the voltage at the ID contact 22 is 0.48V). As can be apparent, the voltage at the ID contact 22 is far below the electrolytic voltage threshold (e.g., 1.23V)_ of water, so even if the USB interface 27 comes into contact with water, it will not be electrolyzed, and thus the ID contact 22 will not become rusted due to the water.

Additionally, *Iₑ* = *I_{b}* + *I_{c}*, and *I_{c}* = *β* ^{∗} *I_{b}*, where I_{b} is the current at the base, I_{c} is the current at the collector, and *β* is the current amplification factor 230 of the BJT. Because the amplificatory factor is far greater than 1, I_{b} can be neglected, and therefore *Iₑ* ≈ *I_{c}*. In other words, I_{c}=0.0048mA.

Furthermore, *U_{ce}* = *U_{c}* - *Uₑ* = *U_{cc}* - (*R_{c}* + *Rₑ*) ^{∗} *I_{c}*, where U_{ce} is the voltage difference between the emitter and the collector, U_{c} is the voltage at the collector, U_{cc} is the voltage 1.8V of the first power supply VI, and R_{c} is the resistance of the collector (e.g., the resistance of the first resistor R1 in some embodiments of this disclosure). Since the resistance of resistor R4 is far greater than the resistance of resistor R1, *U_{c}* ≈ *U_{cc}.* As such, the input signal to the trigger detection circuit 24 is maintained at the default high level (e.g., approximately 1.8V), and the trigger detection circuit 24 does not detect any change of the level from a high level to a low level, so no OTG device is identified as connected.

When there is the OTG device 25 is connected with the USB interface 27, the ID contact 26 of the OTG device is grounded directly, and the ground impedance is lower than 10 ohms. In such examples, the fourth resistor R4 connected with the emitter of the BJT is equivalently connected in parallel with a resistor (e.g., the ground impedance) of lower than 10 ohms. As a result,, there is a low ground resistance of the emitter of the BJT, and at this time U_{be} becomes so high that the state of the BJT is changed from the amplification state to the saturated state, and there is a low turn-on impedance thereof, so equivalently the collector is connected directly with the emitter. Since the emitter is equivalently grounded, the trigger detection circuit 24 is also equivalently grounded, so that the trigger detection circuit 24 can identify the change in the voltage from a high level to a low level, and thus the OTG device may be identified.

In some embodiments of this disclosure, the BJT isolates the trigger detection circuit 24 from the ID contact 22, resulting in different voltages for the two signals which would otherwise have been connected together. The voltage applied to the control end 2311 of the BJT is set reasonably, and the amplification coefficient of the BJT, and the resistance of the fourth resistor R4 are selected reasonably, so that the voltage at the second end of the transistor can be below the electrolytic voltage threshold of water, and the trigger detection circuit 24 does not detect any level change, and thus will not trigger identification of the OTG device 25. When the OTG device 25 is connected, the ground resistor on the ID contact can be bypassed to thereby change the structure of the circuit, so that the trigger detection circuit 24 and the ID contact 22 can be reconnected, and the trigger detection circuit 24 can detect the change in the voltage on the ID contact 22, thus identifying the OTG device 25.

In some embodiments of this disclosure, the voltage of the second power supply V2 is 1.8V, for example, but may alternatively be another value if there is another appropriate power supply, as long as the resistances of the second resistor R2 and the third resistor R3 are adjusted such that the voltage divider circuit outputs a voltage as required for the voltage at the base of the BJT. Furthermore, the BJT may have a large amplification coefficient, and the resistance of the fourth resistor R4 may be far greater than that of the first resistor R1. In some examples, it may be desired to have the resistance of the fourth resistor R4 ten or more times the resistance of the first resistor R1. For example, when R1 is set to 10KΩ, R4 is set to 100 KΩ or more.

In some embodiments, the transistor 231 in the isolation circuit 23 may be a PNP-type BJT, and the first biasing circuit 232 and the second biasing circuit 233 may be set based on the operating principle of the PNP-type BJT. In such examples, upon detecting that the OTG device 25 is not connected with the USB interface 27, the PNP-type BJT operates in a specific state based on the voltage output by the first biasing circuit 232, and the voltage output by the second biasing circuit 233 to control the voltage at the ID contact 22 below the preset voltage, and upon detecting that the OTG device 25 is connected with the USB interface 27, the PNP-type BJT operates in another specific state to trigger the detection circuit 24 to identify the OTG device, although a detailed description thereof is omitted in the embodiment of this disclosure.

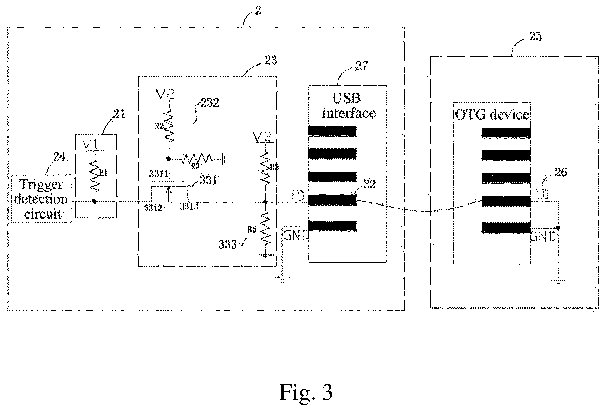

Fig. 3 illustrates a schematic principle diagram of a USB interface circuit 2 according to another example embodiment of this disclosure. The USB interface circuit 2 of Fig. 3 is different from the USB interface circuit 2 of Fig. 2 in the structure of the isolation circuit 23. For example, the transistor in the isolation circuit 23 in the USB interface circuit 2 of Fig. 3 is a Metal Oxide Semiconductor Field Effect Transistor (MOSFET) 331. As shown, the MOSFET 331 includes a control end 3311 as the gate of the MOSFET, a first end 3312 as the drain of the MOSFET, and a second end 3313 as the source of the MOSFET. In some embodiments of this disclosure, the MOSFET 331 is an N-channel MOSFET (NMOSFET), for example.

Furthermore, the isolation circuit 23 includes a second biasing circuit 333 that is different from Fig. 2. For example, the second biasing circuit 333 includes a third power supply V3, and fifth and sixth resistors R5, R6. The fifth and sixth resistors R5, R6 are connected in series between the third power supply V3 and ground. The output of the second biasing circuit 333 serves as a common end of the fifth resistor R5 and the sixth resistor R6 (e.g., the output of the second biasing circuit 333 is located at an intermediate node between the fifth resistor R5 and the sixth resistor R6). In other words, an end of the fifth resistor R5 connected with the sixth resistor R6 acts as the output of the second biasing circuit 333, and/or an end of the fifth resistor R5 connected with the sixth resistor R6 acts as the output of the second biasing circuit 333. For example, in some embodiments, R5=100KΩ, R6=50KQ, and V3=V1=1.8V, so that the voltage output by the second biasing circuit 333 is 0.6V

In this embodiment, R2=100KΩ, and R3=150KQ, so that the voltage output by the first biasing circuit is 1.1V.

When the OTG device 25 is not connected with the USB interface 27, the voltage output by the first biasing circuit 232 of Fig. 3 is 1.1V, and the voltage output by the second biasing circuit 333 of Fig. 3 is 0.6V. In this manner, the voltage difference between the gate and the source of the NMOSFET 331 is Vgs=0.5V, which is below the threshold voltage of the NMOSFET. As a result, the NMOSFET is turned off. Additionally, the voltage at the ID contact 22 is 0.6V, which is below the electrolytic voltage threshold of water. As such, the ID contact 22 will not become rusted from water contact. Also, the input signal to the trigger detection circuit 24 of Fig. 3 is maintained at a high level.

When the OTG device 25 is connected with the USB interface 27 of Fig. 3, the source of the NMOSFET 331 is grounded, and the voltage at the source is 0V. At this time, Vgs=1.1 which is greater than the threshold voltage of the NMOSFET 331. As a result, the NMOSFET is turned on in a saturated state, and the input signal to the trigger detection circuit 24 of Fig. 3 is changed from the high level to the low level thereby allowing the trigger detection circuit 24 to identify the connected OTG device.

In some embodiments, the corresponding function can be performed as long as the threshold voltage of the NMOSFET is greater than 0.5V and less than1.1V.

With reference to Fig. 3, the NMOSFET 331 in the isolation circuit 23 operates respectively in the turned-off state, and the saturated state based on the output voltage of the first biasing circuit 232, and the output voltage of the second biasing circuit 333. When the NMOSFET 331 is operating in the turned-off state, the isolation circuit 23 isolates the power supply circuit 21 from the ID contact 22 to prevent the high level of the power supply circuit 21 from being completely applied to the ID contact 22. In such examples, the second biasing circuit 333 provides the ID contact 22 with a lower voltage so that the voltage at the ID contact 22 is below the electrolytic voltage threshold of water. Also, the input signal to the trigger detection circuit 24 is maintained at the default high level. When the NMOSFET 331 is operating in the saturated state, the trigger detection circuit 24 is electrically connected with the ID contact 22 so that the input signal is changed from the high level to the low level, thereby allowing the trigger detection circuit 24 to detect whether the OTG device is connected.

The transistor 331 in the isolation circuit 23 of Fig. 3 is an N-channel MOSFET, for example. Alternatively, the transistor 331 may be a P-channel MOSFET (PMOSFET), and the first biasing circuit 232 and the second biasing circuit 333 may be configured according to the operating principle of the P-channel MOSFET. As such, when the OTG device 25 is not connected with the USB interface 27, the PMOSFET operates in a specific state based on the voltage output by the first biasing circuit 232, and the voltage output by the second biasing circuit 333 to control the voltage at the ID contact 22 below the preset voltage, and when the OTG device 25 is connected with the USB interface 27, the PMOSFET operates in another specific state to trigger the detection circuit 24 to identify the OTG device 25, although a detailed description thereof is omitted in the embodiment of this disclosure.

In summary, in the USB interface circuit according to the embodiments disclosed herein, the isolation circuit is arranged between the power supply circuit and the ID contact of the USB interface. When the OTG device is not connected with the USB interface, the transistor in the isolation circuit operates in the amplification or turned-off state based on the voltage output by the first biasing circuit and the voltage output by the second biasing circuit. Because the amplification and turned-off states are partially turned-on states, the isolation circuit can prevent the voltage output by the power supply circuit from being completely applied to the ID contact. Parameters of the circuit may be selected appropriately such that the voltage at the ID contact is below the electrolytic voltage threshold of water. As such, water contacting the ID contact will not be electrolyzed, and the ID contact will not become rusted due to the water. Also, the voltage at the first end of the transistor is the same as the output voltage of the power supply circuit. Therefore, the trigger detection circuit will not detect any voltage level change, and thus will not identify the OTG device. When the OTG device is connected with the USB interface, the ID contact is equivalently grounded, the transistor operates in the saturated state, and the first end and the second end of the transistor are equivalently electrically connected directly and grounded. Because the input of the trigger detection circuit is electrically connected with the first end of the transistor, the trigger detection circuit detects the change in the voltage level from a high level to a low level, and thus identifies the OTG device.

Embodiments of this disclosure further provide a mobile device including a USB interface circuit. The USB interface circuit includes a power supply circuit having an output, a USB interface having an ID contact, a trigger detection circuit having an input, and an isolation circuit located between the power supply circuit and the ID contact. The isolation circuit includes a first end and a second end. The first end of the isolation circuit and the output of the power supply circuit are connected with the input of the trigger detection circuit. The second end of the isolation circuit is connected with the ID contact. The isolation circuit is configured to control a voltage at the ID contact to below a preset voltage upon detecting that an OTG device is not connected with the USB interface.

## Claims

1. A mobile device comprising a USB interface circuit, wherein the USB interface circuit comprising a power supply circuit (21) including an output, a USB interface (27) including an ID contact (22), a trigger detection circuit (24) including an input, and an isolation circuit (23) located between the power supply circuit (21) and the ID contact (22) and including a first end and a second end, the first end of the isolation circuit (23) and the output of the power supply circuit (21) connected with the input of the trigger detection circuit (24), the second end of the isolation circuit (23) connected with the ID contact (22), and the isolation circuit (23) configured to control a voltage at the ID contact below a preset voltage upon detecting an On-The-Go, OTG, device is not connected with the USB interface (27);
wherein the preset voltage is an electrolytic voltage threshold of water.

2. The mobile device according to claim 1, wherein the isolation circuit (23) comprises a first biasing circuit (232) including an output, a second biasing circuit (233, 333) including an output, and a transistor (231, 331), wherein the transistor (231, 331) comprises a control end (2311, 3311) connected with the output of the first biasing circuit (232), a first end (2312, 3312) acting as the first end of the isolation circuit (23), and a second end (2313, 3313) acting as the second end of the isolation circuit (23), and wherein the output of the second biasing circuit (233, 333) and the second end of the transistor (231, 331) are connected with the ID contact.

3. The mobile device according to claim 2, wherein the transistor (231) is configured to:
upon detecting that the OTG device is not connected with the USB interface (27), operate in an amplification state or a turned-off state based on a voltage at the output of the first biasing circuit (232) and a voltage at the output of the second biasing circuit (233) to control the voltage at the ID contact (22) below the preset voltage; and
upon detecting that the OTG device is connected with the USB interface (27), operate in a saturated state to trigger the trigger detection circuit (24) to identify the OTG device.

4. The mobile device according to claim 2 or 3, wherein the transistor (231) is a Bipolar Junction Transistor, BJT, and wherein the control end (2311) of the transistor (231) is a base of the BJT, the first end (2312) of the transistor is a collector of the BJT, and the second end (2313) is an emitter of the BJT.

5. The mobile device according to claim 4, wherein the BJT is an NPN-type BJT.

6. The mobile device according to claim 5, wherein the second biasing circuit (233) comprises a resistor (R4) including one end acting as the output of the second biasing circuit and another end grounded.

7. The mobile device according to claim 6, wherein the power supply circuit (21) comprises a power supply (V1), and a resistor (R1) including one end connected with the power supply (V1), and another end acting as the output of the power supply circuit (21).

8. The mobile device according to claim 7, wherein the resistor (R4) of the second biasing circuit (233) includes a resistance that is ten or more times a resistance of the resistor (R1) of the power supply circuit (21).

9. The mobile device according to claim 5, wherein the first biasing circuit (232) is configured to:
upon detecting that the OTG device is not connected with the USB interface (27), cause a difference between a voltage at the output of the first biasing circuit (232) and a voltage at the output of the second biasing circuit (233) to increase above a threshold voltage of the NPN-type BJT.

10. The mobile device according to claim 9, wherein the NPN-type BJT is configured to:
upon detecting that the OTG device is not connected with the USB interface (27), operate in an amplification state based on the voltage at the output of the first biasing circuit (232) and the voltage at the output of the second biasing circuit (233) to control the voltage at the ID contact (22) below the preset voltage.

11. The mobile device according to claim 2, wherein the first biasing circuit (232) comprises a power supply (V2), a first resistor (R2), and a second resistor (R3), wherein the first resistor (R2) and the second resistor (R3) are connected in series between the power supply (V2) and ground, and wherein an end of the first resistor (R2) is connected with the second resistor and acts as the output of the first biasing circuit.

12. The mobile device according to claim 2, wherein the transistor (331) is a Metal Oxide Semiconductor Field Effect Transistor, MOSFET, and wherein the control end (3311) of the transistor (331) is a gate of the MOSFET, the first end (3312) of the transistor (331) is a drain of the MOSFET, and the second end (3313) of the transistor (331) is a source of the MOSFET.

13. The mobile device according to claim 12, wherein the MOSFET is an N-channel MOSFET, and the second biasing circuit (333) comprises a power supply (V3), a first resistor (R5) and a second resistor (R6), wherein the first resistor (R5) and the second resistor (R6) are connected in series between the power supply (V3) and ground, and wherein an end of the first resistor (R5) is connected with the second resistor (R6) and acts as the output of the second biasing circuit (333);
or,
wherein the MOSFET is an N-channel MOSFET, the first biasing circuit is configured to:
upon detecting that the OTG device is not connected with the USB interface, cause a difference between a voltage at the output of the first biasing circuit (232) and a voltage at the output of the second biasing circuit (333) to increase above a threshold voltage of the N-channel MOSFET; and the N-channel MOSFET is configured to: upon detecting that the OTG device is not connected with the USB interface, operate in a turn-off state based on the voltage at the output of the first biasing circuit and the voltage at the output of the second biasing circuit to control the voltage at the ID contact below the preset voltage.

## Patentansprüche

1. Mobile Einrichtung, umfassend eine USB-Schnittstellenschaltung, wobei die USB-Schnittstellenschaltung eine Energieversorgungsschaltung (21), aufweisend einen Ausgang, eine USB-Schnittstelle (27), aufweisend einen ID-Kontakt (22), eine Auslösererfassungsschaltung (24), aufweisend einen Eingang, und eine Isolationsschaltung (23), die zwischen der Energieversorgungsschaltung (21) und dem ID-Kontakt (22) angeordnet ist und ein erstes Ende und ein zweites Ende aufweist, umfasst, wobei das erste Ende der Isolationsschaltung (23) und der Ausgang der Energieversorgungsschaltung (21) mit dem Eingang der Auslösererfassungsschaltung (24) verbunden sind, das zweite Ende der Isolationsschaltung (23) mit dem ID-Kontakt (22) verbunden ist, und die Isolationsschaltung (23) eingerichtet ist, eine Spannung an dem ID-Kontakt unter eine voreingestellte Spannung zu steuern, auf Erfassen, dass eine On-The-Go-(OTG)-Einrichtung mit der USB-Schnittstelle (27) nicht verbunden ist;
wobei die voreingestellte Spannung ein elektrolytischer Spannungsschwellenwert von Wasser ist.

2. Mobile Einrichtung nach Anspruch 1, wobei die Isolationsschaltung (23) eine erste Vorspannungsschaltung (232), aufweisend einen Ausgang, eine zweite Vorspannungsschaltung (233, 333), aufweisend einen Ausgang, und einen Transistor (231, 331), umfasst, wobei der Transistor (231, 331) ein Steuerende (2311, 3311), das mit dem Ausgang der ersten Vorspannungsschaltung (232) verbunden ist, ein erstes Ende (2312, 3312), das als das erste Ende der Isolationsschaltung (23) wirkt, und ein zweites Ende (2313, 3313), das als das zweite Ende der Isolationsschaltung (23) wirkt, umfasst, und wobei der Ausgang der zweiten Vorspannungsschaltung (233, 333) und das zweite Ende des Transistors (231, 331) mit dem ID-Kontakt verbunden sind.

3. Mobile Einrichtung nach Anspruch 2, wobei der Transistor (231) eingerichtet ist: auf Erfassen, dass die OTG-Einrichtung mit der USB-Schnittstelle (27) nicht verbunden ist,
in einem Verstärkungszustand oder einem ausgeschalteten Zustand zu arbeiten auf Grundlage einer Spannung am Ausgang der ersten Vorspannungsschaltung (232) und einer Spannung am Ausgang der zweiten Vorspannungsschaltung (233), um die Spannung an dem ID-Kontakt (22) unter die voreingestellte Spannung zu steuern; und
auf Erfassen, dass die OTG-Einrichtung mit der USB-Schnittstelle (27) verbunden ist, in einem gesättigten Zustand zu arbeiten, um die Auslösererfassungsschaltung (24) auszulösen und die OTG-Einrichtung zu identifizieren.

4. Mobile Einrichtung nach Anspruch 2 oder 3, wobei der Transistor (231) ein Bipolar-Sperrschicht-Transistor (Bipolar Junction Transistor, BJT) ist, und wobei das Steuerende (2311) des Transistors (231) eine Basis des BJT ist, das erste Ende (2312) des Transistors ein Kollektor des BJT ist und das zweite Ende (2313) ein Emitter des BJT ist.

5. Mobile Einrichtung nach Anspruch 4, wobei der BJT ein BJT vom NPN-Typ ist.

6. Mobile Einrichtung nach Anspruch 5, wobei die zweite Vorspannungsschaltung (233) einen Widerstand (R4) umfasst, der ein als der Ausgang der zweiten Vorspannungsschaltung wirkendes Ende und ein anderes geerdetes Ende aufweist.

7. Mobile Einrichtung nach Anspruch 6, wobei die Energieversorgungsschaltung (21) eine Energieversorgung (V1) und einen Widerstand (R1), aufweisend ein Ende, das mit der Energieversorgung (V1) verbunden ist, und ein anderes Ende, das als der Ausgang der Energieversorgungsschaltung (21) wirkt, umfasst.

8. Mobile Einrichtung nach Anspruch 7, wobei der Widerstand (R4) der zweiten Vorspannungsschaltung (233) einen Widerstandswert aufweist, der das Zehnfache oder mehr des Widerstandswerts des Widerstands (R1) der Energieversorgungsschaltung (21) beträgt.

9. Mobile Einrichtung nach Anspruch 5, wobei die erste Vorspannungsschaltung (232 eingerichtet ist:
auf Erfassen, dass die OTG-Einrichtung mit der USB-Schnittstelle (27) nicht verbunden ist, zu bewirken, dass eine Differenz zwischen einer Spannung am Ausgang der ersten Vorspannungsschaltung (232) und einer Spannung am Ausgang der zweiten Vorspannungsschaltung (233) über eine Schwellenspannung des BJT vom NPN-Typs ansteigt.

10. Mobile Einrichtung nach Anspruch 9, wobei der BJT vom NPN-Typ eingerichtet ist: auf Erfassen, dass die OTG-Einrichtung mit der USB-Schnittstelle (27) nicht verbunden ist,
in einem Verstärkungszustand zu arbeiten auf Grundlage der Spannung am Ausgang der ersten Vorspannungsschaltung (232) und der Spannung am Ausgang der zweiten Vorspannungsschaltung (233), um die Spannung am ID-Kontakt (22) unter die voreingestellte Spannung zu steuern.

11. Mobile Einrichtung nach Anspruch 2, wobei die erste Vorspannungsschaltung (232) eine Energieversorgung (V2), einen ersten Widerstand (R2) und einen zweiten Widerstand (R3) umfasst, wobei der erste Widerstand (R2) und der zweite Widerstand (R3) zwischen der Energieversorgung (V2) und Masse in Reihe verbunden sind, und wobei ein Ende des ersten Widerstands (R2) mit dem zweiten Widerstand verbunden ist und als der Ausgang der ersten Vorspannungsschaltung wirkt.

12. Mobile Einrichtung nach Anspruch 2, wobei der Transistor (331) ein Metalloxid-Halbleiter-Feldeffekttransistor, MOSFET, ist und wobei das Steuerende (3311) des Transistors (331) ein Gate des MOSFET ist, das erste Ende (3312) des Transistors (331) ein Drain des MOSFET ist und das zweite Ende (3313) des Transistors (331) eine Source des MOSFET ist.

13. Mobile Einrichtung nach Anspruch 12, wobei der MOSFET ein N-Kanal-MOSFET ist und die zweite Vorspannungsschaltung (333) eine Energieversorgung (V3), einen ersten Widerstand (R5) und einen zweiten Widerstand (R6) umfasst, wobei der erste Widerstand (R5) und der zweite Widerstand (R6) zwischen der Energieversorgung (V3) und Masse in Reihe verbunden sind, und wobei ein Ende des ersten Widerstands (R5) mit dem zweiten Widerstand (R6) verbunden ist und als der Ausgang der zweiten Vorspannungsschaltung (333) wirkt;
oder,
wobei der MOSFET ein N-Kanal-MOSFET ist, wobei die erste Vorspannungsschaltung eingerichtet ist: auf Erfassen, dass die OTG-Einrichtung mit der USB-Schnittstelle nicht verbunden ist, zu bewirken, dass eine Differenz zwischen einer Spannung am Ausgang der ersten Vorspannungsschaltung (232) und einer Spannung am Ausgang der zweiten Vorspannungsschaltung (333) über eine Schwellenspannung des N-Kanal-MOSFET ansteigt; und der N-Kanal-MOSFET eingerichtet ist: auf Erfassen, dass die OTG-Einrichtung mit der USB-Schnittstelle nicht verbunden ist, in einem ausgeschalteten Zustand zu arbeiten auf Grundlage der Spannung am Ausgang der ersten Vorspannungsschaltung und der Spannung am Ausgang der zweiten Vorspannungsschaltung, um die Spannung am ID-Kontakt unter die voreingestellte Spannung zu steuern.

## Revendications

1. Dispositif mobile comprenant un circuit d'interface USB, dans lequel le circuit d'interface USB comprend un circuit d'alimentation électrique (21) incluant une sortie, une interface USB (27) incluant un contact d'identification, (22), un circuit de détection de déclenchement (24) incluant une entrée, et un circuit d'isolation (23) situé entre le circuit d'alimentation électrique (21) et le contact d'identification (22) et incluant une première extrémité et une seconde extrémité, la première extrémité du circuit d'isolation (23) et la sortie du circuit d'alimentation électrique (21) connectée à l'entrée du circuit de détection de déclenchement (24), la seconde extrémité du circuit d'isolation (23) connectée au contact d'identification (22), et le circuit d'isolation (23) configuré pour commander une tension, au niveau du contact d'identification, vers un niveau inférieur à une tension prédéfinie, suite à la détection qu'un dispositif nomade, OTG, n'est pas connecté à l'interface USB (27) ;
dans lequel la tension prédéfinie est un seuil de tension électrolytique de l'eau.

2. Dispositif mobile selon la revendication 1, dans lequel le circuit d'isolation (23) comprend un premier circuit de polarisation (232) incluant une sortie, un second circuit de polarisation (233, 333) incluant une sortie, et un transistor (231, 331), dans lequel le transistor (231, 331) comprend une extrémité de commande (2311, 3311) connectée à la sortie du premier circuit de polarisation (232), une première extrémité (2312, 3312) jouant le rôle de la première extrémité du circuit d'isolation (23), et une seconde extrémité (2313, 3313) jouant le rôle de la seconde extrémité du circuit d'isolation (23), et dans lequel la sortie du second circuit de polarisation (233, 333) et la seconde extrémité du transistor (231, 331) sont connectées au contact d'identification.

3. Dispositif mobile selon la revendication 2, dans lequel le transistor (231) est configuré pour :
lorsqu'il est détecté que le dispositif OTG n'est pas connecté à l'interface USB (27), fonctionner dans un état d'amplification ou dans un état désactivé sur la base d'une tension à la sortie du premier circuit de polarisation (232) et d'une tension à la sortie du second circuit de polarisation (233) pour commander la tension au niveau du contact d'identification (22) vers une valeur inférieure à la tension prédéfinie ; et
lorsqu'il est détecté que le dispositif OTG est connecté à l'interface USB (27), fonctionner dans un état saturé pour déclencher le circuit de détection de déclenchement (24) en vue d'identifier le dispositif OTG.

4. Dispositif mobile selon la revendication 2 ou 3, dans lequel le transistor (231) est un transistor à jonction bipolaire, BJT, et dans lequel l'extrémité de commande (2311) du transistor (231) est une base du transistor BJT, la première extrémité (2312) du transistor est un collecteur du transistor BJT, et la seconde extrémité (2313) est un émetteur du transistor BJT.

5. Dispositif mobile selon la revendication 4, dans lequel le transistor BJT est un transistor BJT de type NPN.

6. Dispositif mobile selon la revendication 5, dans lequel le second circuit de polarisation (233) comprend une résistance (R4) incluant une extrémité jouant le rôle de la sortie du second circuit de polarisation et une autre extrémité mise à la terre.

7. Dispositif mobile selon la revendication 6, dans lequel le circuit d'alimentation électrique (21) comprend une alimentation électrique (V1) et une résistance (R1) incluant une extrémité connectée à l'alimentation électrique (V1) et une autre extrémité jouant le rôle de la sortie du circuit d'alimentation électrique (21).

8. Dispositif mobile selon la revendication 7, dans lequel la résistance (R4) du second circuit de polarisation (233) inclut une résistance électrique qui est au moins dix fois supérieure à une résistance électrique de la résistance (R1) du circuit d'alimentation électrique (21).

9. Dispositif mobile selon la revendication 5, dans lequel le premier circuit de polarisation (232) est configuré pour :
lorsqu'il est détecté que le dispositif OTG n'est pas connecté à l'interface USB (27), amener une différence entre une tension à la sortie du premier circuit de polarisation (232) et une tension à la sortie du second circuit de polarisation (233) à augmenter au-dessus d'une tension de seuil du transistor BJT de type NPN.

10. Dispositif mobile selon la revendication 9, dans lequel le transistor BJT de type NPN est configuré de manière à :
lorsqu'il est détecté que le dispositif OTG n'est pas connecté à l'interface USB (27), fonctionner dans un état d'amplification sur la base de la tension à la sortie du premier circuit de polarisation (232) et de la tension à la sortie du second circuit de polarisation (233), pour commander la tension au niveau du contact d'identification (22) vers une valeur inférieure à la tension prédéfinie.

11. Dispositif mobile selon la revendication 2, dans lequel le premier circuit de polarisation (232) comprend une alimentation électrique (V2), une première résistance (R2) et une deuxième résistance (R3), dans lequel la première résistance (R2) et la deuxième résistance (R3) sont connectées en série entre l'alimentation électrique (V2) et la terre, et dans lequel une extrémité de la première résistance (R2) est connectée à la seconde résistance et joue le rôle de la sortie du premier circuit de polarisation.

12. Dispositif mobile selon la revendication 2, dans lequel le transistor (331) est un transistor à effet de champ métal-oxyde-semi-conducteur, MOSFET, et dans lequel l'extrémité de commande (3311) du transistor (331) est une grille du transistor MOSFET, la première extrémité (3312) du transistor (331) est un drain du transistor MOSFET, et la seconde extrémité (3313) du transistor (331) est une source du transistor MOSFET.

13. Dispositif mobile selon la revendication 12, dans lequel le transistor MOSFET est un transistor MOSFET à canal N, et le second circuit de polarisation (333) comprend une alimentation électrique (V3), une première résistance (R5) et une deuxième résistance (R6), dans lequel la première résistance (R5) et la deuxième résistance (R6) sont connectées en série entre l'alimentation électrique (V3) et la masse, et dans lequel une extrémité de la première résistance (R5) est connectée à la deuxième résistance (R6) et joue le rôle de la sortie du second circuit de polarisation (333) ; ou
dans lequel le transistor MOSFET est un transistor MOSFET à canal N, le premier circuit de polarisation est configuré pour : lorsqu'il est détecté que le dispositif OTG n'est pas connecté à l'interface USB, amener une différence entre une tension à la sortie du premier circuit de polarisation (232) et une tension à la sortie du second circuit de polarisation (333) à augmenter au-dessus d'une tension de seuil du transistor MOSFET à canal N ; et le transistor MOSFET à canal N est configuré pour : lorsqu'il est détecté que le dispositif OTG n'est pas connecté à l'interface USB, fonctionner dans un état de mise hors tension sur la base de la tension à la sortie du premier circuit de polarisation et de la tension à la sortie du second circuit de polarisation pour commander la tension au niveau du contact d'identification vers une valeur inférieure à la tension prédéfinie.
